Europäisches Patentamt

European Patent Office

Office européen des brevets

(19)

(11) Veröffentlichungsnummer : **0 081 884**
**B1**

(12) **EUROPÄISCHE PATENTSCHRIFT**

(45) Veröffentlichungstag der Patentschrift :
**03.12.86**

(51) Int. Cl.⁴ : **H 05 B 41/24**

(21) Anmeldenummer : **82201575.6**

(22) Anmeldetag : **10.12.82**

(54) Schaltungsanordnung zum Betrieb von Hochdruck-Gasentladungslampen.

(30) Priorität : **14.12.81 DE 3149526**

(43) Veröffentlichungstag der Anmeldung :
**22.06.83 Patentblatt 83/25**

(45) Bekanntmachung des Hinweises auf die Patenterteilung : **03.12.86 Patentblatt 86/49**

(84) Benannte Vertragsstaaten :
**BE DE FR GB NL**

(56) Entgegenhaltungen :
**DE-A- 2 642 272**
**DE-A- 2 942 468**

(73) Patentinhaber : **Philips Patentverwaltung GmbH Billstrasse 80**
**D-2000 Hamburg 28 (DE)**
**DE**
**N.V. Philips' Gloeilampenfabrieken**
**Groenewoudseweg 1**
**NL-5621 BA Eindhoven (NL)**
**BE FR GB NL**

(72) Erfinder : **Ganser, Hans-Günter**
**Brockenberg 7a**
**D-5190 Stolberg (DE)**
Erfinder : **Schäfer, Ralf, Dr.**
**Büchel 34**
**D-5100 Aachen (DE)**
Erfinder : **Stormberg, Hans-Peter, Dr.**
**Weissdornweg 52**
**D-5190 Stolberg (DE)**

(74) Vertreter : **Auer, Horst, Dipl.-Ing. et al**
**Philips Patentverwaltung GmbH Billstrasse 80 Postfach 10 51 49**
**D-2000 Hamburg 28 (DE)**

**0 081 884**

**Beschreibung**

Die Erfindung bezieht sich auf eine Schaltungsanordnung zum Betrieb von Hochdruck-Gasentladungslampen mit höherfrequentem Strom, bestehend aus einem an ein übliches Wechselstromnetz angeschlossenen Vollweggleichrichter, dessen Gleichspannung einer Brückenschaltung mit vier Transistoren zugeführt wird, in deren Querzweig eine der Lampe vorgeschaltete Drosselspule angeordnet ist.

Unter Hochdruck-Gasentladungslampen sind insbesondere Quecksilber-, Natrium- und Metallhalogenid-Hochdruck-Gasentladungslampen zu verstehen. Der höherfrequente Strom, mit dem die Lampen betrieben werden, kann entweder ein Wechselstrom oder ein pulsierender Gleichstrom sein. Im Falle des Wechselstrombetriebes ist die Lampe zusammen mit der Drosselspule im Querzweig der Transistorbrücke angeordnet, während bei dem Gleichstromimpulsbetrieb die Lampe zwischen den Vollweggleichrichter und die Transistorbrücke geschaltet ist. Die Frequenz des höherfrequenten Stromes kann z. B. zwischen 1 und 100 kHz liegen.

Eine Transistorbrücke mit vier Leistungs-Feldeffektransistoren (VMOS), in deren Querzweig eine Niederdruck-Gasentladungslampe mit ihrer Drosselspule liegt, ist aus der ITT-Veröffentlichung « VMOS Application Ideas », 1979, bekannt ; siehe auch DE-A-2 942 468.

Werden derartige Brückenschaltungen aus einem Wechselstromnetz gespeist, tritt eine Netzverformung auf, insbesondere wenn anstelle von Niederdrucklampen Hochdrucklampen verwendet werden. Dies ist darauf zurückzuführen, daß sich der Widerstand von Hochdruck-Gasentladungslampen während jeder Halbwelle der Netzwechselspannung bei konstanter Vorschaltimpedanz um einen Faktor 3 bis 10 ändert. Die genaue Größe dieser Änderung hängt ab von den Lampendaten, wie z. B. Quecksilberdruck, Volumen des Entladungsgefäßes oder Zusatz von Metallhalogeniden u. dgl. Durch diese Änderung des Lampenwiderstandes ergibt sich bei sinusförmiger Netzwechselspannung eine nicht-sinusförmige Stromaufnahme aus dem Netz.

An sich ist es aus der DE-OS 2 642 272 bekannt, bei einer Schaltungsanordnung zum Betrieb von Hochdruck-Gasentladungslampen, bei der nur die Lampe im Querzweig einer einem Durchflußwandler nachgeschalteten Transistorbrücke liegt, den Durchflußwandler in Abhängigkeit vom Lampenstrom zu steuern. Hierfür wird ein Teil der Wechselspannung gleichgerichtet und über einen Steuerfunktionsgenerator einem Komparator zugeführt, an dessen anderen Eingang eine dem Lampenstrom proportionale Spannung angelegt wird. Der Komparator steuert mit seinem Ausgangssignal den Schalttransistor des Durchflußwandlers, wodurch der Lampenstrom beeinflußt wird. Eine Drosselspule im Querzweig der Transistorbrücke als Vorschaltimpedanz für die Lampe ist nicht vorgesehen.

Der Erfindung liegt die Aufgabe zugrunde, bei einer Schaltungsanordnung zum Betrieb von Hochdruck-Gasentladungslampen eine nahezu sinusförmige Stromaufnahme aus dem Wechselstromnetz mit möglichst einfachen Mitteln, d. h. ohne Verwendung eines Steuerfunktionsgenerators, zu erreichen.

Diese Aufgabe wird bei einer Schaltungsanordnung eingangs erwähnter Art gemäß der Erfindung dadurch gelöst, daß die Taktfrequenz der Transistorbrücke in Abhängigkeit von der Stromaufnahme aus dem Wechselstromnetz innerhalb jeder Periode der Netzwechselspannung geändert wird.

Auf diese Weise wird die im Querzweig der Transistorbrücke liegende Drosselspule in ihrer Impedanz so geändert, daß sich ein möglichst konstanter Gesamtwiderstand aus Lampe und Vorschaltimpedanz und damit eine sinusförmige Stromaufnahme aus dem Wechselstromnetz ergibt.

Gemäß einer bevorzugten Ausführungsform nach der Erfindung ist die Schaltungsanordnung derart aufgebaut, daß über einem in der Stromzuführung zum Vollweggleichrichter liegenden Widerstand eine dem Netzwechselstrom proportionale Spannung abgegriffen und über einen Gleichrichter dem ersten Eingang eines Differenzverstärkers zugeführt wird, während ein Teil der Netzwechselspannung einem weiteren Gleichrichter und von dort dem zweiten Eingang des Differenzverstärkers zugeführt wird, dessen Ausgang mit einem spannungsgesteuerten Impulsoszillator verbunden ist, der Impulse mit einer vom Ausgangssignal des Differenzverstärkers abhängigen Frequenz erzeugt, die der Steuerschaltung der Transistorbrücke zugeführt werden.

Ein Ausführungsbeispiel nach der Erfindung wird nunmehr anhand der Zeichnung näher beschrieben. Es zeigen :

Figur 1   eine Schaltungsanordnung zum Betrieb einer Hochdruck-Gasentladungslampe mit einer im Querzweig einer Transistorbrücke angeordneten Drosselspule,

Figur 2   die Impulsdiagramme zum Steuern der Transistorbrücke,

Figur 3   den Spannungsverlauf über dem Querzweig der Transistorbrücke,

Figur 4   den Stromverlauf durch die Lampe,

Figur 5   den Stromverlauf durch die Transistorbrücke,

Figur 6   das von der Netzwechselspannung abgeleitete Referenzsignal am Eingang eines Differenzverstärkers,

Figur 7   das dem Netzwechselstrom proportionale Stromsignal am Eingang des Differenzverstärkers,

Figur 8   das Ausgangssignal des Differenzverstärkers,

Figur 9   die der Steuerschaltung der Transistorbrücke zugeführten Steuerimpulse.

2

Mit A und B sind Eingangsklemmen zum Anschließen an ein Wechselstromnetz von z. B. 220 V, 50 Hz, bezeichnet. An diese Eingangsklemmen ist über ein Hochfrequenznetzfilter, bestehend aus einer Filterspule 1 und einem Filterkondensator 2, ein Brückengleichrichter 3 mit vier Dioden angeschlossen, dessen Ausgang ein Kondensator 4 parallelgeschaltet ist.

Die Gleichrichteranordnung 3, 4 bildet eine Gleichspannungsquelle, an die eine Brückenschaltung mit vier Transistoren 5 bis 8 angeschlossen ist. Parallel zu jedem der Transistoren 5 bis 8 liegt je eine Schutzdiode 9 bis 12. Im Querzweig der Transistorbrücke ist eine mit einer Drosselspule 13 in Reihe liegende Hochdruck-Gasentladungslampe 14 angeordnet. Die Anordnung enthält keinen Schaltnetzteil. Die Schutzdioden 9 bis 12 haben die Aufgabe, die beim Schalten der Transistorbrücke in der Drosselspule 13 induzierte Spannung über den Kondensator 4 kurzzuschließen.

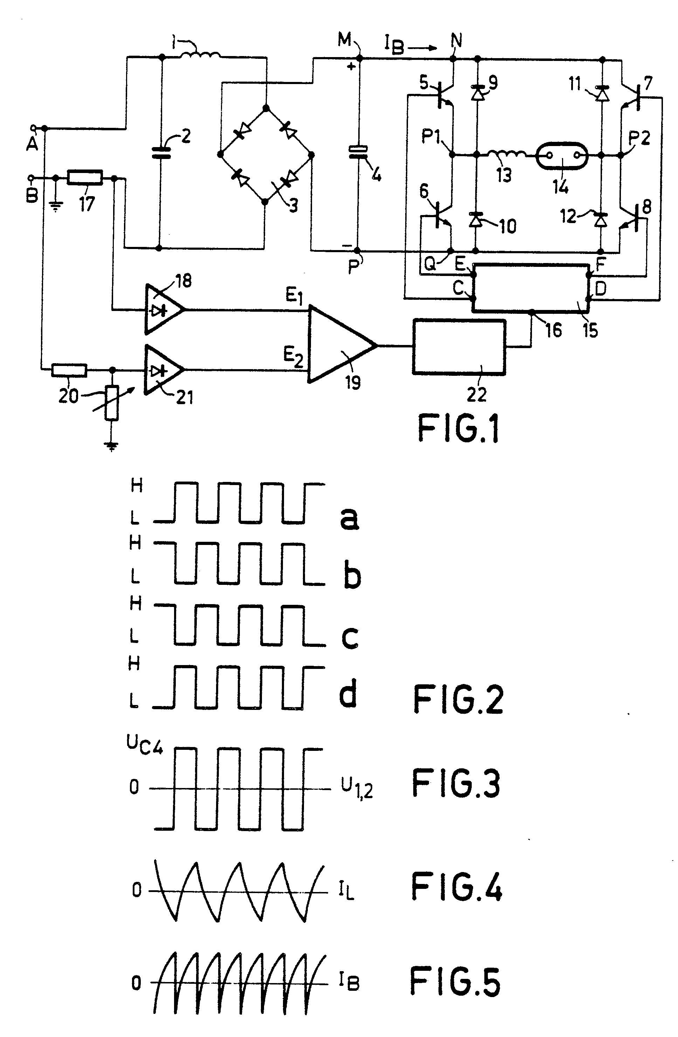

Die Basis der Transistoren 5 bis 8 wird von den Ausgängen C bis F einer Transistorsteuerschaltung 15 mit rechteckförmigen Signalen einer gegenüber der Netzfrequenz von 50 Hz hohen Taktfrequenz in der Größenordnung von 1 bis 100 kHz beaufschlagt, wobei die Ausgänge C bis F so geschaltet sind, daß jeweils die Transistoren 5 und 8 auf High(H)-Signal geschaltet sind (Fig. 2a und d), während die Transistoren 6 und 7 sich im Low (L)-Zustand (Fig. 2b und c) befinden und umgekehrt. Fig. 2a zeigt das Impulsdiagramm am Ausgang C der Transistorsteuerschaltung 15, Fig. 2b am Ausgang D, Fig. 2c am Ausgang E und Fig. 2d am Ausgang F.

Die Taktfrequenz der Steuerschaltung 15 wird dabei durch die Pulsfrequenz einer an ihrem Eingang 16 anliegenden Impulsfolge eingestellt, auf deren Erzeugung weiter unten eingegangen wird.

Sind die Ausgänge C und F auf H-Signal, so werden die Transistoren 5 und 8 leitend, während die Transistoren 6 und 7 gesperrt sind. Der Punkt P1 des Brückenquerzweiges wird dann mit der positiven Seite des Kondensators 4 und der Punkt P2 des Brückenquerzweiges mit der negativen Seite des Kondensators 4 verbunden. Sind die Ausgänge D und E der Steuerschaltung 15 auf H-Signal, so werden die Transistoren 6 und 7 leitend und 5 und 8 gesperrt, so daß P1 jetzt mit der Minusseite und P2 mit der Plusseite des Kondensators 4 verbunden wird. Auf diese Weise hat die Spannung $U_{1,2}$ zwischen den Punkten P1 und P2 schematisch das im Zeitdiagramm der Fig. 3 gezeigte Aussehen, wobei ihre Höhe von der über dem Kondensator 4 anliegenden Spannung $U_{C4}$ abhängt. Da der Kondensator 4 im allgemeinen klein gewählt wird ($\lesssim 1~\mu F$), entspricht $U_{C4}$ praktisch dem Momentanwert der gleichgerichteten Netzwechselspannung, so daß die in Fig. 3 gezeigte hochfrequente Spannung $U_{C4}$ eine sinusförmige 100 Hz-Einhüllende besitzt. Die Spannung $U_{1,2}$ wird dann über die Drosselspule 13 der Lampe 14 zugeführt, so daß die Drosselspule 13 als Vorschaltimpedanz wirkt und sich in der Lampe 14 der in Fig. 4 ebenfalls schematisch dargestellte hochfrequente Stromverlauf $I_L$ ergibt, der auch eine 100 Hz-Einhüllende besitzt.

Da die Taktfrequenz zur Steuerung der Transistoren 5 bis 8 groß gegenüber der Netzfrequenz ist, kann die Drosselspule 13 klein sein — verglichen mit einer konventionellen 50 Hz-Drosselspule — und dennoch als Voschaltimpedanz wirksam werden.

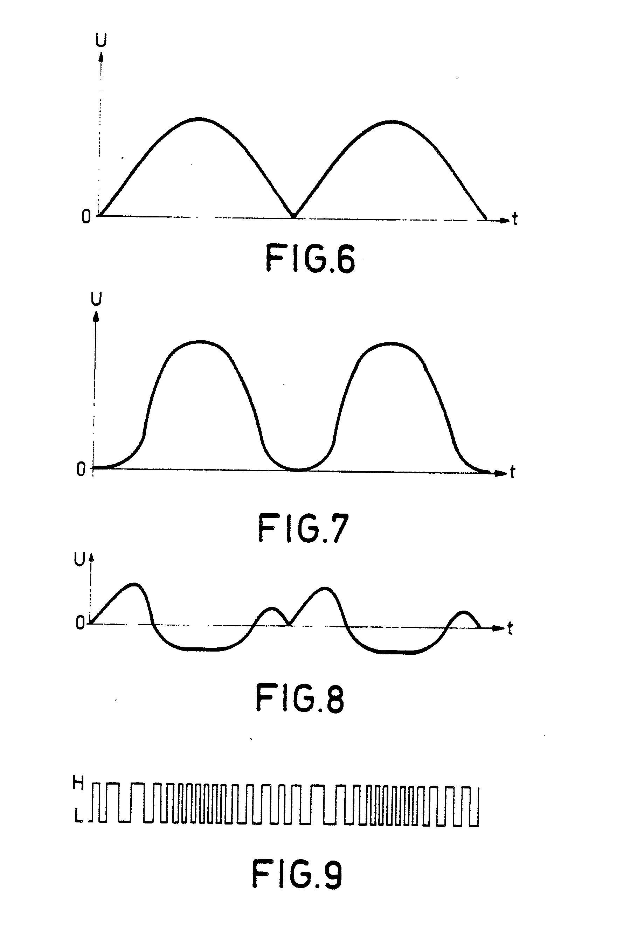

Die hochfrequenten Änderungen des Lampenstromes führen zu ebensolchen hochfrequenten Änderungen des Stromes $I_B$ durch die Transistorbrücke (Fig. 5) und damit der Stromaufnahme aus dem Wechselstromnetz. Um dies zu verhindern, werden diese hochfrequenten Anteile mit dem Netzfilter 1, 2 ausgefiltert.

Die bisher beschriebene Anordnung ist eine konventionnelle Brückenschaltung mit allen bekannten Eigenschaften, wie z. B. Vermeidung von Kataphorese und Lichtausbeutesteigerung bei einigen Lampentypen. Darüber hinaus wird bei der Schaltungsanordnung nach Fig. 1 die Taktfrequenz der Brückentransistoren während jeder Halbwelle der Netzwechselspannung in folgender Weise geändert : Über einem in der Stromzuführung zum Vollweggleichrichter 3 liegenden Meßwiderstand 17 wird eine dem Netzwechselstrom proportionale Spannung abgegriffen und über einen Lineargleichrichter 18 dem ersten Eingang El eines Differenzverstärkers 19 zugeführt. Weiter wird über einen Spannungsteiler 20 ein Teil der Netzwechselspannung auf einen zweiten Lineargleichrichter 21 und anschließend auf den zweiten Eingang E2 des Differenzverstärkers 19 gegeben. An diesem zweiten Eingang E2 steht also eine gleichgerichtete Sinusspannung an, deren Amplitude durch den Spannungsteiler 20 eingestellt werden kann und die als Referenzsignal zur Regelung des Netzwechselstromes dient (Fig. 6). Dieses sinusförmige Signal wird dann mit dem am ersten Eingang E1 anstehenden Netzwechselstromsignal (Fig. 7) verglichen. Der Differenzverstärker 19 liefert eine Ausgangsspannung, die dem Momentanwert der Differenz zwischen Netzwechselstromsignal und sinusförmigem Referenzsignal proportional ist (Fig. 8). In den Fig. 6 bis 8 sind schematisch die Eingangs- und Ausgangssignale des Differenzverstärkers 19 gezeigt für eine der Deutlichkeit halber gegenüber dem wirklichen Fall übertriebene Abweichung des Netzwechselstromes von der Sinusform. Dabei kann es zur Unterdrückung von Regelschwingungen vorteilhaft sein, die Verstärkung des Differenzverstärkers 19 derart während jeder Halbwelle zu ändern, daß das Ausgangssignal proportional zur relativen Abweichung zwischen Netzwechselstrom I und Referenzsignal R ist, d. h. proportional zu (R-I)/R. Mit diesem Ausgangssignal wird dann ein spannungsgesteuerter Impulsoszillator 22 beaufschlagt, der eine impulsförmige Spannung mit bei Eingangsspannung Null fester Frequenz $f_0$ erzeugt, die bei positiver Eingangsspannung entsprechend erniedrigt und bei negativer Eingangsspannung erhöht wird. Mit dieser Impulsspannung variabler Frequenz f wird dann die Transistorsteuerschaltung 15 beaufschlagt, die ihrerseits mit dieser Frequenz f die Transistorbrücke schaltet. Liegt also der momentane Netzwechselstrom unter dem vorgegebenen sinusförmigen Referenzsignal. so wird die Schaltfrequenz der Transistorbrücke erniedrigt. die Impedanz der Drosselspule 13 sinkt und somit erhöht sich die Stromaufnahme aus dem Netzt. Umgekehrt wird bei einem momentanen Netzwechselstrom, der größer als das Referenzsignal ist, die Schaltfrequenz erhöht, wodurch die Impedanz der Drosselspule 13 steigt und der Netzstrom sinkt. Eine derartige Frequenzänderung der am Eingang 16 der Transistorsteuerschaltung 15 anliegenden Impulsfolge ist in Fig. 9 dargestellt, wobei im Realfall die Frequenz sowie die Frequenzänderung größer sind.

Die beschriebene Schaltungsanordnung stellt einen Proportionalregelkreis dar, der eine möglichst sinusförmige Stromaufnahme aus dem Netz erzwingt. Der Effektivwert des Stromes und damit die Lampenleistung kann über die Größe des Referenzsignals, also z. B. des Spannungsteilerverhältnisses, eingestellt werden. Auch Lampen mit geringeren Leistungen lassen sich hiermit vorteilhaft betreiben. So wurden z. B. eine 60 W-Metallhalogenidlampe und eine 40 W-Quecksilberhochdrucklampe einmal mit konstanter Frequenz und einmal mit der beschriebenen Frequenzregelung betrieben. In den Tabellen I und II sind die zugehörigen Daten für die niederfrequenten Fourierkomponenten des Netzwechselstromes angegeben. Man erkennt, daß mit der Frequenzänderung insbesondere die 3. Oberwelle deutlich verringert wird. Als Impulsoszillator 22 und Transistorsteuerschaltung 15 wurde der integrierte Standardbaustein TL 494 CN von Texas Instruments verwendet.

| Tabelle I | 60 W Metallhalogenidlampe | |
|---|---|---|
| Oberwelle Nr. | f = 4,5 KHz | f variabel |
| 3 (150 Hz) | 17,5% | 7,1 % |
| 5 (250 Hz) | 9,6 % | 4,1 % |
| 7 (350 Hz) | 3,8 % | 2,2 % |
| 9 (450 Hz) | 2,0 % | 1,8 % |

Anteile der Oberwellen in % der Grundwelle (50 Hz)

| Tabelle II | 40 W Quecksilberhochdrucklampe | |
|---|---|---|
| Oberwelle Nr. | f = 10.7 KHz | f variabel |
| 3 (150 Hz) | 15,8 % | 8,9 % |
| 5 (250 Hz) | 6,7 % | 5,0 % |
| 7 (350 Hz) | 1,6 % | 2,2 % |
| 9 (450 Hz) | 1,7 % | 1,3 % |

Bei dem bisher beschriebenen Ausführungsbeispiel wird die Lampe mit Wechselstrom betrieben. Für sehr kleine Hochdruck-Gasentladungslampen, insbesondere für Metallhalogenidentladungslampen, eignet sich auch ein Betrieb mit Gleichstromimpulsen. In diesem Fall könnte die Lampe 14 bei der Schaltung nach Fig. 1 aus dem Brückenquerzweig herausgenommen und zwischen die Gleichrichteranordnung 3, 4 und die Transistorbrücke 5 bis 8 geschaltet werden, z. B. zwischen die Punkte M und N oder P und Q. Die Drosselspule 13 verbleibt dann allein im Brückenquerzweig.

## Patentansprüche

1. Schaltungsanordnung zum Betrieb von Hochdruck-Gasentladungslampen mit höherfrequentem Strom, bestehend aus einem an ein übliches Wechselstromnetz angeschlossenen Vollweggleichrichter, dessen Gleichspannung einer Brückenschaltung mit vier Transistoren zugeführt wird, in deren Querzweig eine der Lampe vorgeschaltete Drosselspule angeordnet ist, dadurch gekennzeichnet, daß die Taktfrequenz der Transistorbrücke (5 bis 8) in Abhängigkeit von der Stromaufnahme aus dem Wechselstromnetz innerhalb jeder Periode der Netzwechselspannung geändert wird.

2. Schaltungsanordnung nach Anspruch 1, dadurch gekennzeichnet, daß über einem in der Stromzuführung zum Vollweggleichrichter (3) liegenden Widerstand (17) eine dem Netzwechselstrom proportionale Spannung abgegriffen und über einen Gleichrichter (18) dem ersten Eingang (E1) eines Differenzverstärkers (19) zugeführt wird, während ein Teil der Netzwechselspannung einem weiteren Gleichrichter (21) und von dort dem zweiten Eingang (E2) des Differenzverstärkers zugeführt wird, dessen Ausgang mit einem spannungsgesteuerten Impulsoszillator (22) verbunden ist, der Impulse mit einer vom Ausgangssignal des Differenzverstärkers abhängigen Frequenz erzeugt, die der Steuerschaltung (15) der Transistorbrücke (5 bis 8) zugeführt werden.

## Claims

1. A circuit arrangement for operating high-pressure gas discharge lamps with current of higher frequency comprising a full-wave rectifier which is connected to a conventional alternating current mains and whose direct voltage is supplied to a bridge circuit comprising four transistors, whose transverse branch includes a choke coil arranged in front of the lamp, characterized in that the clock frequency of the transistor bridge (5 to 8) is varied within each period of the mains alternating voltage in dependence upon the current derived from the alternating current mains.

2. A circuit arrangement as claimed in claim 1, characterized in that accross a resistor (17) connected in the current lead to the full-wave rectifier (3) a voltage proportional to the mains alternating current is derived and is supplied through a rectifier (18) to the first input (E1) of a differential amplifier (19), while a part of the mains alternating voltage is supplied to a further rectifier (21) and thence to the second input (E2) of the differential amplifier, whose output is connected to a voltage-controlled pulse oscillator (22), which produces pulses having a frequency dependent upon the output signal of the differential amplifier, which are supplied to the control circuit (15) of the transistor bridge (5 to 8).

## Revendications

1. Dispositif de circuit pour le fonctionnement de lampes à décharge dans le gaz à haute pression avec un courant à haute fréquence, constitué par un redresseur biphasé connecté à un réseau de courant alternatif usuel, dont la tension continue est amenée à un montage comportant quatre transistors, dans la dérivation transversale duquel une bobine d'arrêt est montée en série avec la lampe, caractérisé en ce que la fréquence d'horloge du pont de transistor (5 à 8) varie en fonction du prélèvement de courant sur le réseau de courant alternatif dans chaque période de la tension alternative de réseau.

2. Dispositif de circuit selon la revendication 1, caractérisé en ce que par l'intermédiaire d'une résistance (17) insérée dans l'amenée de courant au redresseur biphasé (3), une tension proportionnelle au courant alternatif de réseau est prise et amenée par l'intermédiaire d'un redresseur (18), à la première entrée (E₁) d'un amplificateur différentiel (19), alors qu'une partie de la tension alternative de réseau est amenée à un autre redresseur (21) et ensuite à la deuxième entrée (E₂) de l'amplificateur différentiel, dont la sortie est connectée à un oscillateur d'impulsion (22) commandé par tension, qui fournit des impulsions d'une fréquence dépendant du signal de sortie de l'amplificateur différentiel, qui sont amenées au circuit de commande (15) du pont de transistor (5 à 8).

FIG.1

FIG.2

FIG.3

FIG.4

FIG.5

FIG.6

FIG.7

FIG.8

FIG.9